# EUROPÄISCHE PATENTSCHRIFT

(11) **EP 2 265 459 B1**
(45) Veröffentlichungstag und Bekanntmachung des Hinweises auf die Patenterteilung: **26.02.2014**
(21) Anmeldenummer: 09720124.8
(22) Anmeldetag: 10.03.2009
(51) Int. Cl.: B60K 37/06, B60R 25/00, G06F 3/01

(54) **VERFAHREN UND VORRICHTUNG ZUM ERZEUGEN EINES NUTZERERKENNUNGSSIGNALS**
METHOD AND DEVICE FOR PRODUCING A USER RECOGNITION SIGNAL
PROCEDE ET DISPOSITIF POUR GENERER UN SIGNAL DE RECONNAISSANCE D UTILISATEUR

(30) Priorität: 10.03.2008 DE 102008013476
(43) Veröffentlichungstag der Anmeldung: 29.12.2010
(73) Patentinhaber: Volkswagen Aktiengesellschaft, 38440 Wolfsburg (DE)
(72) Erfinder: WÄLLER, Christoph, 38106 Braunschweig (DE); BACHFISCHER, Katharina, 40476 Düsseldorf (DE); BENDEWALD, Lennart, 38442 Wolfsburg (DE); BOHRER, Lorenz, 10623 Berlin (DE)
(74) Vertreter: Obst, Bernhard
(86) Internationale Anmeldenummer: PCT/EP2009/001806
(87) Internationale Veröffentlichungsnummer: WO 2009/112271

(56) Entgegenhaltungen:
- EP-A- 1 710 672
- WO-A-2004/022388
- DE-A1-102004 033 275
- GB-A- 2 428 094

## Beschreibung

Die Erfindung betrifft eine Vorrichtung gemäß dem Oberbegriff des Patentanspruchs 1 sowie ein Verfahren gemäß dem Oberbegriff des Patentanspruchs 8.

In modernen Kraftfahrzeugen, die häufig eine Vielzahl von Komfortfunktionen umfassen, steigt ein Bedarf, die unterschiedlichen Nutzer des Kraftfahrzeugs insbesondere bei einer Betätigung von Bedienelementen unterscheiden zu können. Dies gilt beispielsweise, jedoch nicht ausschließlich, bei einer Verwendung von Dual-View- oder Multi-View-Displays, die unterschiedliche Anzeigeinhalte unter unterschiedlichen Betrachtungswinkeln darstellen. Solche Dual-View- oder Multi-View-Anzeigevorrichtungen werden in Kraftfahrzeugen beispielsweise in einer Mittelkonsole zwischen einem Fahrer und einem Beifahrer angeordnet. Der Fahrer und der Beifahrer können gleichzeitig unterschiedliche Anzeigeinhalte wahrnehmen. Wird eine solche Dual-View- oder Multi-View-Anzeige zusätzlich mit einem ortsauflösenden berührungsempfindlichen Sensor gekoppelt und beispielsweise als Touchscreen ausgebildet, so kann über eine Berührung der Anzeigefläche eine Nutzereingabe erfasst werden. Hierbei wird der Berührposition eine Aktion, Funktion oder ähnliches zugeordnet, die mit einer entsprechenden Funktion, Aktion oder ähnlichem korreliert ist, die an der Berührposition dargestellt ist. Es ergibt sich, dass es hierfür notwendig ist zu erfassen, welcher Nutzer, der Fahrer oder der Beifahrer, die Anzeigefläche berührt hat.

Auch in anderen Bedienszenarien in Kraftfahrzeugen, die keine Dual-View- oder Multi-View-Anzeigevorrichtung umfassen, ist es sinnvoll oder notwendig, eine Nutzererkennung auszuführen. Um eine Ablenkung eines Fahrers vom Straßenverkehr zu vermeiden, ist es beispielsweise sinnvoll, einzelne Funktionalitäten, beispielsweise eines Multimediasystems, die eine aufwendige Bedienung erfordern, nur einem Beifahrer während der Fahrt zu gestatten.

Sollen nutzerspezifische Einstellungen vorgenommen werden, so können Bedienelemente eingespart werden, wenn eine Nutzererkennung erfolgt. Für eine Sitzheizungsregelung, die sitzindividuell ausgebildet ist, reicht beispielsweise ein Bedienelement aus, wenn zusätzlich eine Nutzererkennung vorgenommen wird, die ein Nutzererkennungssignal erzeugt, welches angibt, ob der Fahrer oder der Beifahrer das Bedienelement betätigt hat.

Im Stand der Technik sind unterschiedliche Systeme für eine Nutzererkennung bzw. eine Fahrer-Beifahrer-Unterscheidung vorgeschlagen worden.

Aus der EP 1 710 672 A2 ist beispielsweise ein System mit einer nutzerunterscheidenden Steuerung sowie ein Verfahren zum Betreiben eines Systems mit personalisierter Nutzersteuerung beschrieben. Das System weist leitende Oberflächen auf, die in der Nähe jedes Bedienelements angeordnet werden. Ein Sender wird mit den leitenden Oberflächen verbunden. Der Sender gibt ein einzigartiges Signal an jede leitende Oberfläche aus. Ferner sind in der Nähe der Nutzer der Bedienelemente Elektroden angeordnet, die jeweils mit einem Empfänger gekoppelt sind. Betätigt der Nutzer eines der Bedienelemente, so findet eine kapazitive Einkopplung des entsprechenden einzigartigen Signals in den Körper des Nutzers statt. Dieser bildet zwischen der leitenden Oberfläche und der Elektrode eine HF-Übertragungsstrecke aus. Das von dem Empfänger empfangene Signal wird ausgewertet, um ein Nutzererkennungssignal auszugeben, welches den Nutzer als Fahrer oder Beifahrer identifiziert.

Aus der GB 2 428 094 A ist eine Steuereinrichtung für eine Eingabevorrichtung beschrieben, die zumindest zwischen einem ersten und einem zweiten Nutzer auf Basis eines Nutzererkennungssignals unterscheidet, das von einem der Nutzer empfangen ist. Hierfür sind beispielsweise in Sitzen Antennen angeordnet, die mit Sendeeinheiten gekoppelt sind, welche unterschiedliche Hochfrequenzsignale erzeugen. Diese werden über die jeweilige im Sitz befindliche Antenne in den auf dem Sitz sitzenden Nutzer eingekoppelt und über den Körper des Nutzers übertragen. Berührt einer der Nutzer den Touchscreen, so wird das über den Körper des Nutzers, der eine HF-Übertragungsstrecke ausbildet, übertragene HF-Signal, welches in den Touchscreen eingekoppelt wird, gemessen. Das eingekoppelte HF-Signal wird ausgewertet und anhand der Auswertung der HF-Übertragung die Nutzererkennung vorgenommen.

Dieses System ist zwar zuverlässig, weist jedoch den Nachteil auf, dass in die Nutzer fortwährend Hochfrequenzsignale eingekoppelt werden, auch wenn keine Betätigung eines Bedienelements beabsichtigt ist oder vorgenommen wird.

Aus der DE 10 2004 033 275 A1, die die Merkmale des Oberbegriffs der Ansprüche 1 und 8 beinhaltet, sind eine Freigabevorrichtung und ein Verfahren zum Freigeben oder Sperren einzelner vorbestimmter Funktionen eines Gerätes bekannt, welches über ein Bedienelement sowohl von dem Beifahrer wie auch von dem Fahrer eines Kraftfahrzeugs bedienbar sind. Um sicherzustellen, dass der Fahrer während der Fahrt das Gerät nicht über das Bedienelement bedienen kann, ist dort vorgeschlagen, eine Überwachungseinrichtung zum Überwachen und Unterscheiden vorzusehen, ob der Fahrer oder der Beifahrer eine Bedienung des Geräts über ein Bedienelement zumindest beabsichtigt. Ferner ist eine Entscheidungseinrichtung vorgesehen, um über eine Freigabe oder ein Sperren einzelner vorbestimmter Funktionen des Gerätes für den Fahrer oder den Beifahrer zu entscheiden, je nachdem welche dieser Personen zuvor von der Überwachungseinrichtung als Bediener des Bedienelements erkannt wurde. Bei einer Ausführungsform ist vorgesehen, zunächst eine Bildüberwachungseinrichtung oder eine Lichtschrankeneinrichtung zu nutzen, um eine Grobüberwachung des Fahrers oder des Beifahrers auszuführen. Wird hierüber eine Annäherung an ein Bedienelement erkannt, wird eine Feldüberwachungseinrichtung aktiviert, über die sich genauer beurteilen lässt, ob eine Annäherung an das Bedienelement tatsächlich stattfindet oder nicht.

Der Erfindung liegt somit das technische Problem zugrunde, eine Vorrichtung zum Erzeugen eines Nutzererkennungssignals zu schaffen sowie ein entsprechendes Verfahren, mit denen eine nachteilige Beeinflussung der Umwelt und/oder Umgebung reduziert werden, beispielsweise ein Energie- und Ressourcenverbrauch, und/oder eine Signaleinkopplung von Hochfrequenzsignalen in den Körper von Nutzern von Kraftfahrzeugen bei Nutzererkennungsvorrichtungen und Verfahren eingangs genannter Art reduziert werden können.

Die technische Aufgabe wird durch eine Vorrichtung mit den Merkmalen des Patentanspruchs 1 sowie ein Verfahren mit den Merkmalen des Patentanspruchs 8 erfindungsgemäß gelöst. Vorteilhafte Ausgestaltungen der Erfindung ergeben sich aus den Unteransprüchen.

Die Erfindung basiert auf dem Grundgedanken, dass eine aktive Nutzererkennung zum Erzeugen des Nutzererkennungssignals nur oder erst dann ausgeführt wird, wenn ein Aktionssignal vorliegt, welches anzeigt, dass eine Nutzererkennung zu Unterscheidungszwecken sinnvoll ist. Somit können zumindest die meisten Komponenten deaktiviert werden oder ausgeschaltet bleiben oder werden, solange kein Aktionssignal vorliegt. Das Aktionssignal selbst wird ohne eine auf die Aktivierung der Nutzererkennung abziehende Handlung oder Aktion des Nutzers erzeugt oder abgeleitet.

Vorgeschlagen wird eine Vorrichtung zum Erzeugen eines Nutzerkennungssignals bei einer Betätigungshandlung mindestens eines Nutzers von mehreren Nutzern in einem Fahrzeug umfassend eine Unterscheidungseinrichtung, um das den mindestens einen der Nutzer identifizierende Nutzerkennungssignal zu erzeugen, wobei mindestens eine Erfassungseinheit, mit der bei einem Erfassen einer Aktion eines der Nutzer mindestens ein Aktionssignal erzeugt wird, mit der Unterscheidungseinrichtung informationstechnisch gekoppelt ist, so dass die Unterscheidungseinrichtung nur nach oder bei einem Vorliegen des einen Aktionssignals aktiviert ist oder wird.

Erfindungsgemäß ist vorgesehen, dass die Erfassungseinheit das mindestens eine Bedienelement umfasst und ein beim Betätigen des mindestens einen Bedienelements erzeugtes Bediensignal als Aktionssignal verwendet wird.

Analog wird ein Verfahren zum Erzeugen eines Nutzerkennungssignals bei einer Betätigungshandlung mindestens eines Nutzers von mehreren Nutzern in einem Fahrzeug mit Hilfe einer Unterscheidungseinrichtung vorgeschlagen, umfassend die Schritte: Ausführen einer Nutzerunterscheidung mittels der Unterscheidungseinrichtung, um den mindestens einen Nutzer zu identifizieren und Erzeugen eines den mindestens einen der Nutzer identifizierenden Nutzererkennungssignals, wobei mittels mindestens einer Erfassungseinheit eine Aktion eines der Nutzer erfasst wird und/oder ein Vorliegen der Aktion überwacht wird, und bei dem Erfassen der Aktion ein Aktionssignal erzeugt wird, und durch das Aktionssignal die Unterscheidungseinrichtung so gesteuert wird, dass diese nur nach oder bei einem Vorliegen des einen Aktionssignals aktiviert wird. Erfindungsgemäß ist vorgesehen, dass die Erfassungseinheit das mindestens eine Bedienelement umfasst und als Aktion ein beim Betätigen des mindestens einen Bedienelements erzeugtes Bediensignal als Aktionssignal verwendet wird.

Insbesondere wird eine Vorrichtung zum Erzeugen eines Nutzererkennungssignals bei einer Betätigungshandlung mindestens eines Nutzers von mehreren Nutzern in einem Fahrzeug vorgeschlagen, welche eine Steuereinheit sowie Sende- und Empfangsmittel umfasst, die mit der Steuereinheit verknüpft sind und so zueinander angeordnet sind, dass zwischen ihnen bei der Betätigungshandlung des mindestens einen Nutzers über dessen Körper eine nutzerspezifische Hochfrequenzübertragungsstrecke ausgebildet wird, über die ein HF-Signal übertragen wird, wobei die Steuereinheit ausgebildet ist, die HF-Signalübertragung auszuwerten, um das den mindestens einen der Nutzer identifizierende Nutzererkennungssignal zu erzeugen, wobei mindestens eine Erfassungseinheit, mit der bei einem Erfassen einer Aktion eines der Nutzer mindestens ein Aktionssignal erzeugt wird, mit einer Aktivierungseinheit gekoppelt ist, und die Aktivierungseinheit ausgebildet ist, die Sendemittel nur nach oder bei einem Vorliegen des einen Aktionssignals zu aktivieren. Bei einem eingangs genannten Verfahren zum Erzeugen eines Nutzererkennungssignals bei einer Betätigungshandlung mindestens eines Nutzers von mehreren Nutzern in einem Fahrzeug mit Hilfe von einer Steuereinheit sowie Sendemittein und Empfangsmitteln, die mit der Steuereinheit verknüpft sind und so zueinander angeordnet sind, dass zwischen ihnen bei der Betätigungshandlung des mindestens einen Nutzers über dessen Körper eine Nutzerspezifische Hochfrequenzübertragungsstrecke ausgebildet wird, sind die Schritte vorgesehen: Bereitstellen mindestens eines HF-Signals mit Hilfe der Sendemittel, Empfangen des über den Körper des mindestens einen Nutzers übertragenen HF-Signals mittels der Empfangsmittel, Auswerten der HF-Übertragung des HF-Signals, um die nutzerspezifische Übertragungsstrecke zu ermitteln und hierüber den mindestens einen Nutzer zu identifizieren, und Erzeugen eines den mindestens einen der Nutzer identifizierenden Nutzererkennungssignals, wobei mittels mindestens einer Erfassungseinheit eine Aktion eines Nutzers erfasst wird oder ein Vorliegen der Aktion überwacht wird und bei dem Erfassen der Aktion ein Aktionssignal erzeugt wird und die Sendemittel über eine Aktivierungseinheit so gesteuert werden, dass die Sendemittel nur nach oder bei einem Vorliegen des einen Aktionssignals das mindestens eine HF-Signal bereitstellen. Die Erfindung bietet den Vorteil, dass nur bei oder nach einem Erfassen einer Aktion auch HF-Signale bereitgestellt werden, die in den oder die Nutzer eingekoppelt werden. Hierdurch wird eine unnötige Signaleinkopplung vermieden. Eine Reduktion der HF-Einkopplung verringert mögliche Störungen, die durch die HF-Signale in anderen elektronischen Komponenten hervorgerufen werden können, die ein Nutzer des Fahrzeugs zusätzlich zu den Komponenten des Fahrzeugs nutzt. Ferner wird eine Belastung des Organismus der Nutzer durch die HF-Sendesignale reduziert. Diese gilt zwar als nicht gesundheitsschädlich, dennoch ist eine Reduktion aufgrund der großen Anzahl von technischen Geräten, die im HF-Bereich Energie abstrahlen, wünschenswert. Ferner wird elektrische Energie eingespart.

Bei einer Ausführungsform der Erfindung ist zusätzlich vorgesehen, dass die mindestens eine Erfassungseinheit mindestens eine in räumlicher Nähe zu mindestens einem Bedienelement angeordnete Annäherungserfassungseinheit umfasst, mit der eine Annäherung eines Körperteils eines der Nutzer an das mindestens eine Bedienelement als Aktion erfassbar ist oder erfasst wird. Eine solche Ausführungsform bietet den Vorteil, dass unabhängig von einer Detektion einer Übertragung von HF-Signalen eine Annäherung an das Bedienelement erfasst wird. Erst in diesem Falle, wenn die Annäherung eines Körperteils des Nutzers an eines der Bedienelemente erfasst wird oder ist, wird die Annäherung als Aktion erfasst und für eine nachfolgend notwendige Nutzerunterscheidung eine Aktivierung der Sendemittel vorgenommen, so dass mindestens ein HF-Signal zur Einkopplung in mindestens einen der Nutzer bereitgestellt wird.

Bei dem Annäherungssensor bzw. der Annäherungserfassungseinheit kann es sich beispielsweise um ein Infrarotreflexionssystem handeln, bei dem elektromagnetische Strahlung in einen definierten Raumbereich vor oder um das Bedienelement abgestrahlt wird und eine Reflexion der infraroten Strahlung bei einem Eindringen in einen vorgegebenen begrenzten Raumbereich als Annäherung erfasst wird. Das Aussenden der infraroten Strahlung kann beispielsweise über eine oder mehrere Leuchtdioden erfolgen. Die reflektierte Infrarotstrahlung kann mittels einer oder mehrerer Fotodioden erfasst werden, die im infraroten Wellenlängenbereich sensitiv ist.

Bei der erfindungsgemäßen Ausführungsform kann die HF-Übertragung erst während des Bedienvorgangs undloder unmittelbar danach ausgelöst werden. Da die Zeiten, die eine Auswertung des Bediensignals bzw. Aktionssignals, dessen Übertragung und die Zeitspanne, die für eine Aktivierung der Sendemittel benötigt wird, kurz im Verhältnis zu den Zeitspannen sind, in denen eine menschliche Bedienhandlung abläuft, ist es vollkommen ausreichend, die HF-Signalübertragung erst zu aktivieren, wenn die Bedienhandlung bereits vorgenommen ist oder wird. Da die HF-Signalübertragung über die nutzerspezifische Hochfrequenzübertragungsstrecke jeweils über eine kapazitive Einkopplung und Auskopplung erfolgt, ist eine Übertragung des Hochfrequenzsignals selbst dann noch möglich, wenn der Nutzer, wie es etwa bei einer Bedienung eines als Tasters ausgebildeten Bedienelements möglich ist, bereits sein zum Betätigen verwendetes Körperteil, insbesondere einen Finger, wieder von dem Bedienelement entfernt, während die HF-Signalübertragung stattfindet. Eine zuverlässige Detektion der HF-Signalübertragung ist auch in einem solchen Falle gewährleistet.

Um ein unnötiges Bereitstellen von HF-Signalen zu vermeiden, wenn ein Sitz des Fahrzeugs nicht belegt ist, ist bei einer Ausführungsform der Erfindung vorgesehen, dass die Erfassungseinheit mindestens eine Sitzbelegungserfassungseinheit umfasst, die eine Belegung mindestens eines Fahrzeugsitzes durch einen der Nutzer anzeigt und als Aktion ein Sitzen eines der Nutzer auf dem mindestens einen Fahrzeugsitz erfasst. Hierbei sind Ausführungsformen möglich, bei denen bei einer Belegung des von der Sitzbelegungseinheit überwachten Fahrzeugsitzes ein Bereitstellen eines HF-Signals an einem anderen Fahrzeugsitz aktiviert wird. Ebenso ist es selbstverständlich denkbar, dass bei einer erkannten Belegung ein Bereitstellen des HF-Signals an dem entsprechenden Fahrzeugsitz erfolgt. Ebenso ist es möglich, bei einigen Ausführungsformen vorzusehen, dass mehrere Aktionssignale erforderlich sind, um zumindest an einzelnen Fahrzeugsitzen ein Bereitstellen von HF-Signalen zu aktivieren.

Bei einer Ausführungsform der Erfindung ist vorgesehen, dass die Sendemittel eine oder mehrere Sendeeinheiten umfassen, die jeweils einem Fahrzeugsitz zugeordnet sind, und ein für den Fahrzeugsitz oder eine Gruppe von Fahrzeugsitzen, der dieser Fahrzeugsitz angehört, spezifisches HF-Signal für ein Einkoppeln in einen der Nutzer, der auf dem entsprechenden Fahrzeugsitz sitzt, bereitstellen. Hierdurch ist eine eindeutige Unterscheidung auch im Falle von mehr als zwei Nutzern oder Nutzergruppen möglich. Ist ein Bedienelement beispielsweise so angeordnet, dass es außer vom Fahrer und Beifahrer auch von einem Passagier auf einem Fondsitz betätigt werden kann, so kann es wünschenswert sein, beispielsweise wenn es sich um einen Lautstärkeregler handelt, den Fahrer, den Beifahrer und die Fondpassagiere als getrennte Personen oder Gruppen zu unterscheiden. Insbesondere wenn mehr als zwei Nutzer zuverlässig unterschieden werden sollen und/oder eine Mehrfachnutzung eines Bedienelements, beispielsweise eines Touchscreens zeitgleich durch mehrere verschiedene Nutzer zuverlässig erkannt werden soll, ist eine solche Ausführungsform, bei der jedem einzelnen Fahrzeugsitz oder jeder Gruppe von Fahrzeugsitzen ein spezifisches HF-Signal zugeordnet ist, zu bevorzugen.

Nutzerspezifische bzw. fahrzeugspezifische HF-Signale können sich beispielsweise hinsichtlich ihrer Frequenz, ihrer Modulation und/oder einer zeitlichen Abfolge und Zeitspannen, in denen diese bereitgestellt werden, unterscheiden.

Die Empfangsmittel sind bei einer Ausführungsform so ausgeführt, dass sie mindestens eine Empfangseinheit umfassen, die in räumlicher Nähe zu dem einen oder den mehreren Bedienelementen so angeordnet ist, dass bei der Betätigungshandlung, die ein Betätigen des einen oder eines der mehreren Bedienelemente umfasst, die nutzerspezifische Hochfrequenzübertragungsstrecke ausgebildet wird. Dies bedeutet, dass die Empfangseinheit, die für ein Bedienelement bei dessen Betätigung eine Bereitstellung eines Nutzererkennungssignals gewährleisten soll, so angeordnet ist, dass eine kapazitive Einkopplung des Hochfrequenzsignals, welches über den Körper des Nutzers übertragen wird, in ausreichender Signalstärker zuverlässig empfangen wird. Hierbei ist es durchaus möglich, eine Empfangseinheit zu nutzen, die dieses für mehrere nebeneinander und beabstandet voneinander angeordnete Bedienelemente gewährleistet.

Bei einer anderen Ausführungsform der Erfindung ist vorgesehen, dass die Empfangsmittel eine oder mehrere Empfangseinheiten umfassen, die jeweils einem Fahrzeugsitz zugeordnet sind und so angeordnet sind, dass einer der Nutzer, der auf dem entsprechenden Fahrzeugsitz sitzt, bei einem Ausführen der Betätigungshandlung die nutzerspezifische Hochfrequenzübertragungsstrecke zwischen den Sendemitteln und der dem entsprechenden Fahrzeugsitz zugeordneten Empfangseinheit ausbildet. Eine Nutzererkennung kann hierbei ausgeführt werden, indem ausgewertet wird, über welche Empfangseinheit Hochfrequenzsignale übertragen worden sind.

Ferner sieht eine Ausführungsform vor, dass die Sendemittel mindestens eine Sendeeinheit umfassen, die in räumlicher Nähe zu dem einen oder den mehreren Bedienelementen so angeordnet ist, so dass bei der Betätigungshandlung, die ein Betätigen des einen oder eines der mehreren Bedienelemente umfasst, die nutzerspezifische Hochfrequenzübertragungsstrecke zwischen der Sendeeinheit und den Empfangsmitteln ausgebildet wird.

Es sind somit zwei unterschiedliche Übertragungsrichtungen möglich, die alternativ oder kombiniert eingesetzt werden können. Bei der einen Übertragungsrichtung werden die Hochfrequenzsignale in der Nähe oder in den Fahrzeugsitzen in die Nutzer eingekoppelt und über Empfangseinheiten benachbart zu dem einen oder den mehreren Bedienelementen empfangen. Bei der anderen Übertragungsrichtung findet eine Frequenzsignaleinkopplung in den Körper des Nutzers benachbart zu dem einen oder den mehreren Bedienelementen statt und sind mehrere Empfänger den Fahrzeugsitzen zugeordnet. Unterschiedliche Bedienelementgruppen können für unterschiedliche Übertragungsrichtungen ausgebildet sein. Hierbei ist es vorteilhaft, Hochfrequenzsignale mit unterschiedlicher Frequenz zu verwenden, so dass es nicht zu Störungen zwischen den beiden Übertragungsrichtungen kommt. Ferner wird hierdurch die Möglichkeit geschaffen, komplizierte Bedienszenarien zu realisieren, bei denen es beispielsweise erforderlich ist, dass der Nutzer ein Bedienelement, beispielsweise ein Lenkrad, berührt, während er ein anderes beabstandet angeordnetes Bedienelement bedient. Während das Lenkrad beispielsweise eine Sendeeinheit umfasst und eine entsprechende Empfangseinheit in dem Fahrersitz untergebracht ist, kann zusätzlich eine Sendeeinheit in dem Fahrersitz untergebracht sein und eine Empfangseinheit benachbart zu einem Bedienelement in der Mittelkonsole, welches beispielsweise als Touchscreen oder als Dual-View-Display ausgebildet ist.

Selbstverständlich können zwei oder mehr Bedienbereiche vorgesehen sein, die getrennt voneinander ausgebildete Sende- oder Empfangseinheiten umfassen und so ausgebildet sind, dass mit ihnen zeitgleich vorgenommene Betätigungen durch unterschiedliche Nutzer in den unterschiedlichen Bedienbereichen ausgewertet werden können und beiden Betätigungshandlungen bzw. den hierbei erzeugten Bediensignalen Nutzerkennungen zugeordnet werden können.

Bei einigen Ausführungsformen ist vorgesehen, dass die Sendemittel nur aktiv bleiben, solange das mindestens eine Aktionssignal vorliegt. Dieses ist sinnvoll, wenn als Aktion eine Annäherung an das mindestens eine Bedienelement oder die Betätigung des mindestens einen Bedienelements erfasst werden. Ebenso ist es jedoch auch möglich, die Aktivierung nur für eine vorgegebene Zeitspanne vorzunehmen.

Die Merkmale des erfindungsgemäßen Verfahrens weisen dieselben Vorteile wie die entsprechenden Merkmale der erfindungsgemäßen Vorrichtung auf.

Zur Unterscheidung der Nutzer können neben einer HF-Übertragung auch andere Prinzipien genutzt werden. Eine Unterscheidung kann über optische Verfahren und Vorrichtungen erfolgen, die Kamerabilder auswerten, Ebenso können Systeme genutzt werden, die Lichtschranken, beispielsweise mit IR-Strahlung betriebene Sichtschranken, verwenden. Wieder andere Systeme werten eine Reflexion von ausgesandtem IR-Licht aus, um eine Entfernungsbestimmung zu Objekten auszuführen. Werden Abstände desselben Objekts, beispielsweise einer Hand eines Nutzers, von mehreren Punkten aus bestimmt, so kann über eine Triangulation die Position des Objekts und aus mehreren Beobachtungen eine Trajektorie abgeleitet werden, die eine Nutzerunterscheidung auf der Basis zulässt, dass sich beispielsweise Fahrer und Beifahrer einem Bedienelement in einer Mittelkonsole von unterschiedlichen Seiten annähern.

Nachfolgend wird die Erfindung anhand bevorzugter Ausführungsbeispiele unter Bezugnahme auf eine Zeichnung näher erläutert. Hierbei zeigen:
- Fig. 1: eine schematische Darstellung eines Bediensystems, welches eine Nutzererkennung umfasst, nach einer ersten Ausführungsform mit einem Bediensystem;
- Fig. 2: eine schematischen Darstellung einer zweiten Ausführungsform eines Bediensystems mit einer Nutzererkennung, bei dem die mindestens eine Erfassungseinheit als Annäherungssensor ausgebildet ist;
- Fig. 3: eine schematische Darstellung eines Bediensystems mit einer Vorrichtung zur Nutzererkennung, wobei als Erfassungseinheit das zum Bedienen verwendete Bedienelement genutzt wird;
- Fig. 4: eine schematische Darstellung eines Bediensystems eines Kraftfahrzeugs nach einer weiteren Ausführungsform, bei der beide Fahrzeugsitze mit einer zugeordneten Empfangseinheit ausgebildet sind;
- Fig. 5: eine schematische Darstellung eines Bediensystems eines Kraftfahrzeugs mit einer Nutzererkennungsvorrichtung, die mehrere Bedienbereiche abdeckt; und
- Fig. 6: eine schematische Darstellung eines Bediensystems eines Fahrzeugs, bei dem ein Bediensignal eines Bedienelements als Aktionssignal zur Aktivierung der Bereitstellung von HF-Signalen verwendet wird.

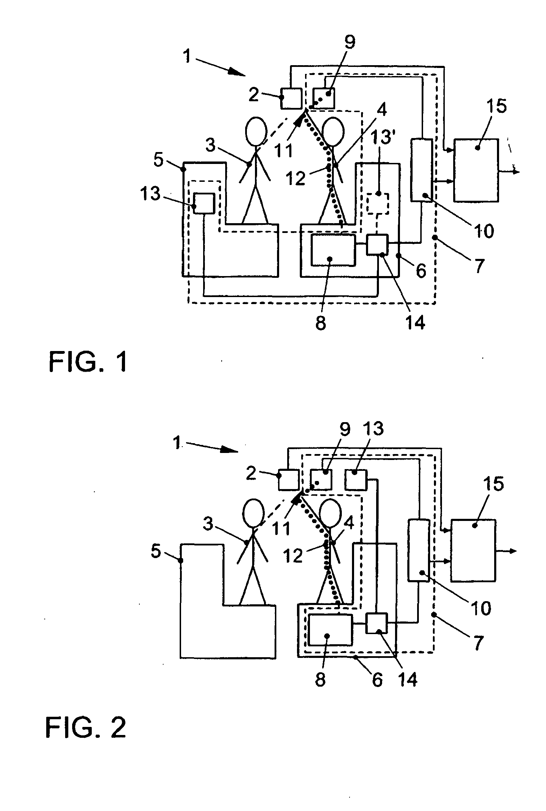

In den Fig. 1 bis 6 sind jeweils schematisch unterschiedliche Ausführungsformen eines Bediensystems 1 eines Fahrzeugs dargestellt. Das Bediensystem 1 umfasst ein Bedienelement 2, welches vorgesehen ist, Nutzereingaben zu erfassen. Das Bedienelement 2 kann eine beliebige Ausgestaltung aufweisen. Insbesondere kann es sich um einen Touchscreen, einen Dreh-/Drückschalter, einen Tastschalter oder ein beliebiges anderes Bedienelement, beispielsweise auch ein Lenkrad, einen Joystick usw., handeln. Das Bedienelement ist so ausgestaltet, dass es von unterschiedlichen Nutzern 3, 4 durch eine Betätigungshandlung betätigt werden kann. Bei den Nutzern 3, 4 kann es sich beispielsweise um einen Fahrer und einen Beifahrer des Fahrzeugs handeln, sofern das Fahrzeug beispielsweise ein Personenkraftwagen ist. Die Nutzer 3, 4 sind jeweils auf einem Fahrzeugsitz 5, 6 angeordnet. Jedem der Nutzer 3, 4 ist eindeutig einer der Fahrzeugsitze 5, 6 zugeordnet, auf dem dieser, insbesondere sitzend, angeordnet ist. Um zu unterscheiden, welcher der Nutzer 3, 4 eine Betätigungshandlung vorgenommen hat, um über das Bedienelement eine Nutzereingabe vorzunehmen, ist eine Vorrichtung 7 zum Erzeugen eines Nutzererkennungssignals vorgesehen. Im Folgenden wird für die Vorrichtung 7 zum Erzeugen eines Nutzererkennungssignals synonym auch der Begriff Nutzererkennungsvorrichtung verwendet, die ebenfalls mit dem Bezugszeichen 7 gekennzeichnet wird. Die Nutzererkennungsvorrichtung 7 umfasst in Fig. 1 eine Sendeeinheit 8 als Sendemittel, eine Empfangseinheit 9 als Empfangsmittel, die über eine Steuereinheit 10 miteinander verbunden sind. Im dargestellten Ausführungsbeispiel ist die Sendeeinheit 8, die ausgebildet ist, Hochfrequenzsignale bereitzustellen, in den Fahrzeugsitz 6 so integriert, dass sie in den auf dem Fahrzeugsitz 6 sitzenden Nutzer 4 im aktiven Zustand, in dem die Sendeeinheit 8 ein Hochfrequenzsignal zur Einkopplung bereitstellt, in den Körper des Nutzers 6 einkoppelt. Nähert der Nutzer 6 ein Körperteil, beispielsweise seine Hand 11, beim Betätigen des Bedienelements 2 diesem Bedienelement 2 an, so wird über den Körper des Nutzers 6 eine nutzerspezifische Hochfrequenzübertragungsstrecke 12 zwischen der Sendeeinheit 8 und der Empfangseinheit 9 ausgebildet. Der dem Nutzer 3 zugeordnete Fahrzeugsitz 5 ist bei dieser Ausführungsform nicht mit einer Sendeeinheit ausgestattet. Die Steuereinheit 10 kann also den Nutzer 4, beispielsweise den Beifahrer, eindeutig identifizieren, wenn dieser über eine Betätigungshandlung das Bedienelement 2 betätigt, um eine Nutzereingabe vorzunehmen, indem es den Empfang eines Hochfrequenzsignals detektiert. Die Steuereinheit 10 erzeugt somit ein den Nutzer 4 identifizierendes Nutzererkennungssignal, sobald sie eine HF-Signalübertragung über die Hochfrequenzübertragungsstrecke 12, die durch den Körper des Nutzers 4 verläuft, detektiert. Eine Bediensystemsteuereinheit wertet sowohl ein Bediensignal des Bedienelements als auch das Nutzererkennungssignal aus, um nutzerbezogen eine mit dem Bedienelement 2 verknüpfte Funktion auszulösen. Nimmt hingegen der Nutzer 3 eine Betätigungshandlung vor, d.h. in diesem Beispiel beispielsweise der Fahrer, so wird von der Steuereinheit 10 keinen Empfang eines Hochfrequenzsignals detektiert.

Bei einer Ausführungsform kann das Nichtausgeben eines Nutzerkennungssignals als ein einen der Nutzer 3, 4 identifizierendes Nutzerkennungssignal interpretiert werden.

Um eine unnötige Einkopplung bzw. ein unnötiges Bereitstellen des Hochfrequenzsignals durch die Sendeeinheit 8 zu verhindern, ist eine Erfassungseinheit 13 vorgesehen, die eine Aktion eines der Nutzer 3, 4 erfasst. Die Erfassungseinheit 13 erzeugt ein Aktionssignal, wenn sie eine Aktion eines der Nutzer 3, 4 erfasst hat. Das Aktionssignal wird von einer Aktivierungseinheit 14 ausgewertet, die eine Aktivierung der Sendemittel abhängig von dem Aktionssignal steuert.

Bei der Ausführungsform nach Fig. 1 ist die Erfassungseinheit als Sitzbelegungssensor ausgebildet und dem Fahrzeugsitz 5 zugeordnet, in dem keine Sendeeinheit der Sendemittel integriert ist. Nimmt man an, dass der Nutzer, der mit dem Bezugszeichen 4 versehen ist, der Fahrer ist, so wird dieser zuverlässig als Nutzer erkannt, ohne dass ein Hochfrequenzsignal über die durch seinen Körper verlaufende Hochfrequenzübertragungsstrecke 11 übertragen wird, solange nicht der Beifahrer, der mit dem Bezugszeichen 3 versehen ist, auf dem Fahrzeugsitz 5 sitzt, in dem die Erfassungseinheit 13 als Sitzbelegungseinheit ausgebildet ist. Sitzt jedoch der Nutzer 3 (Beifahrer) auf dem Fahrzeugsitz 5, so wird diese Aktion über die Erfassungseinheit 13 erfasst und über die Aktivierungseinheit 14 ein Bereitstellen des Hochfrequenzsignals durch die Sendeeinheit 8 bewirkt. Wird eine Betätigung des Bedienelements 2 durch den Nutzer 3 (Beifahrer) vorgenommen, so wird zeitgleich von der Empfangseinheit 9 kein Hochfrequenzsignal detektiert. Die Steuereinheit 10, die die Hochfrequenzsignalübertragung auswertet, erzeugt somit ein Nutzererkennungssignal, welches den Beifahrer als den eine Betätigung vornehmenden Nutzer 3 kennzeichnet. Das von dem Bedienelement bei einer Betätigung erzeugte Bediensignal wird gemeinsam mit dem Nutzererkennungssignal von einer Bediensystemsteuereinheit 15 ausgewertet, um hierüber eine nutzerbezogene Funktionsauslösung, eine nutzerbezogene Funktionssteuerung usw. zu bewirken.

Eine alternative Ausführungsform kann vorsehen, dass auch in dem Fahrzeugsitz 6 eine weitere Erfassungseinheit 13' alternativ oder zusätzlich zu der Erfassungseinheit 13 integriert ist. Diese ist vorzugsweise ebenfalls als Sitzbelegungseinheit ausgebildet. Hierdurch können andere Szenarien realisiert werden. In Fahrzeugen, bei denen beispielsweise die Fahrzeugsitze 5, 6 alternativ genutzt werden können, kann somit erreicht werden, dass das Hochfrequenzsignal von der Sendeeinheit 8 nur bereitgestellt wird, wenn beide Fahrzeugsitze 5, 6 durch zwei Nutzer 3, 4 belegt sind. In allen übrigen Situationen kann das Nutzererkennungssignal direkt anhand der durch die Erfassungseinheit 13 und die weitere Erfassungseinheit 13' erzeugte Aktionssignale (hier Sitzbelegungssignale) ermittelt werden. Informationsleitungen direkt zu der Steuereinheit 10 sind hier aus Gründen der Vereinfachung nicht dargestellt. Ebenso ist es möglich, die Aktivierungseinheit 15 in die Steuereinheit 10 zu integrieren.

In Fig. 2 ist eine weitere Ausführungsform der Erfindung dargestellt. Gleiche technische Merkmale sind in allen Figuren mit denselben Bezugszeichen versehen. Auch bei dieser Ausführungsform ist lediglich in dem Fahrzeugsitz 6 eine Sendeeinheit 8 der Sendemittel integriert. Bei dieser Ausführungsform ist eine Erfassungseinheit 13 vorgesehen, die benachbart zu dem Bedienelement 2 so angeordnet ist, dass sie eine Annäherung eines Körperteils eines der Nutzers 3 oder 4 bei einer beabsichtigten oder vorgenommenen Betätigung des Bedienelements 2 erfassen kann. Die Erfassungseinheit 13 ist somit als Annäherungssensor ausgebildet. Vorteilhafterweise können solche Annäherungssensoren beispielsweise eine Reflexion von ausgesandter elektromagnetischer Strahlung im infraroten Wellenlängenbereich auswerten. Es können jedoch auch beliebige andere aus dem Stand der Technik dem Fachmann gut bekannte Annäherungssensoren als Erfassungseinheit 13 verwendet werden. Bei dieser Ausführungsform wird eine Annäherung an das Bedienelemente 2 bei einer Betätigungshandlung als Aktion erfasst. Sobald eine Annäherung an das Bedienelement 2 erfasst ist, wird ein Aktionssignal erzeugt, welches wiederum die Aktivierungseinheit 14 veranlasst, über die Sendeeinheit 8 in den Nutzer 4, der auf dem Fahrzeugsitz 6 sitzt, ein Hochfrequenzsignal einzukoppeln, welches bei einer Betätigungshandlung durch den Nutzer 4 über den Körper des Nutzers 4 zu der Empfangseinheit 9 über die durch den Nutzer ausgebildete Hochfrequenzübertragungsstrecke 12 übertragen wird. Wird durch die Steuereinheit 10 somit eine Hochfrequenzübertragung festgestellt, wird als Nutzerkennungssignal ein den Nutzer 4 identifizierendes Signal ausgegeben. Wird hingegen keine Hochfrequenzübertragung durch die Steuereinheit 10 festgestellt, so wird als Nutzerkennungssignal eine dem Nutzer 3 identifizierende Nutzererkennung ausgegeben, da die Betätigung durch den Nutzer 3 vorgenommen sein muss. Es versteht sich, dass durch eine Betätigungshandlung des Bedienelementes 2 durch den Nutzer 3 eine Hochfrequenzeinkopplung in den Nutzer 4 ausgelöst wird.

Bei einer Ausführungsform ist der Nutzer 3 der Fahrer und der Nutzer 4 der Beifahrer. In einer anderen Ausführungsform ist der Nutzer 3 der Beifahrer und der Nutzer 4 der Fahrer. Diese ist beispielsweise sinnvoll, wenn bestimmte das Fahrverhalten des Fahrzeugs beeinflussende Betätigungshandlungen, die über das Bedienelement 2 erfasst werden, abgesichert werden sollen und auf keinen Fall durch den Beifahrer ausgeführt werden dürfen.

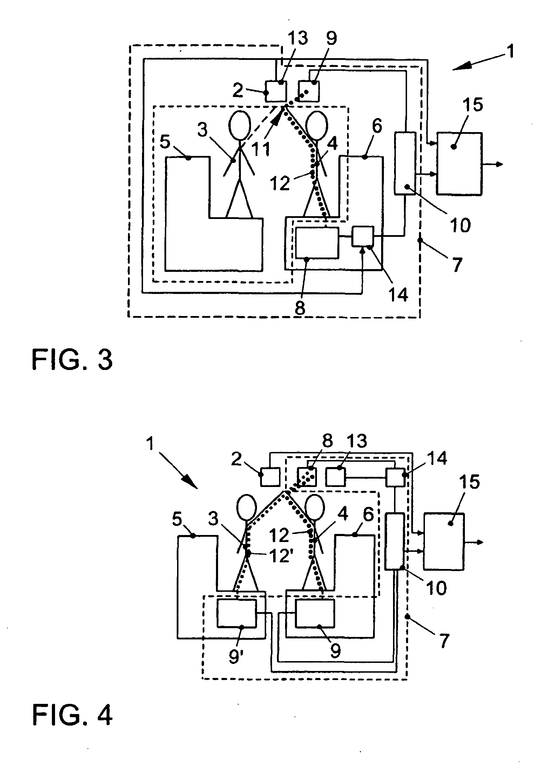

In Fig. 3 ist eine weitere Ausführungsform eines Bediensystems 1 eines Fahrzeugs gezeigt, bei der das Bedienelement 2 zugleich als Erfassungseinheit 13 genutzt wird. Dies bedeutet, dass das Bediensignal als Aktionssignal von der Aktivierungseinheit 14 ausgewertet wird. Da eine Signalübertragung und Aktivierung schnell im Verhältnis zu einer menschlichen Bewegung erfolgt, ist es vollkommen ausreichend, die Hochfrequenzsignalbereitstellung erst zu beginnen, während oder unmittelbar nachdem eine Betätigungshandlung des Bedienelements 2 stattgefunden hat. Da das Hochfrequenzsignal kapazitiv in den Nutzer 4 ein- und ausgekoppelt wird, ist eine physische Berührung des Bedienelements 2 im Zeitpunkt des Empfangs des übertragenen Hochfrequenzsignals nicht notwendig. Somit kann eine zuverlässige Nutzererkennung durch die Steuereinheit 10, die die Hochfrequenzsignalübertragung auswertet, auch in diesem Fall zuverlässig erfolgen. Ansonsten ähnelt die Ausführungsform der nach Fig. 2.

In Fig. 4 ist eine weitere Ausführungsform eines Bediensystems 1 dargestellt, bei der benachbart zu dem Bedienelement 2 die Sendeeinheit 8 der Sendemittel angeordnet ist. Zusätzlich ist als Erfassungseinheit 13 zum Erfassen einer Aktion eines der Nutzer 3, 4 ein Annäherungssensor vorgesehen. Bei dieser Ausführungsform sind in die Fahrzeugsitze 5, 6 entsprechend Empfangseinheiten 9, 9' der Empfangsmittel integriert. Je nachdem welcher der Benutzer das Bedienelement 2 betätigt, wird zwischen der Sendeeinheit 8 und einer der Empfangseinheiten 9, 9' eine Hochfrequenzübertragungsstrecke 12 über den Nutzer 4 bzw. eine weitere Hochfrequenzübertragungsstrecke 12' über den Nutzer 3 ausgebildet. Die Steuereinheit 10 wertet aus, über welche nutzerspezifische Hochfrequenzübertragungsstrecke 12, 12' das Hochfrequenzsignal übertragen ist. Entsprechend wird das Nutzerkennungssignal erzeugt. Diese Ausführungsform bietet darüber hinaus den Vorteil, dass auch eine zeitgleiche Benutzung des Bedienelements, welches beispielsweise als Touchscreen oder sogar als Dual-View- oder Multi-View-Touchscreen ausgebildet sein kann, zuverlässig erkannt wird. In einem solchen Fall müssen weitere Vorkehrungen getroffen werden, um zu unterscheiden, welchem der Nutzer 3, 4 welche Berührposition auf dem Bedienelement 2 zuzuordnen ist. Die Ausführungsform ähnelt ansonsten der nach Fig. 2.

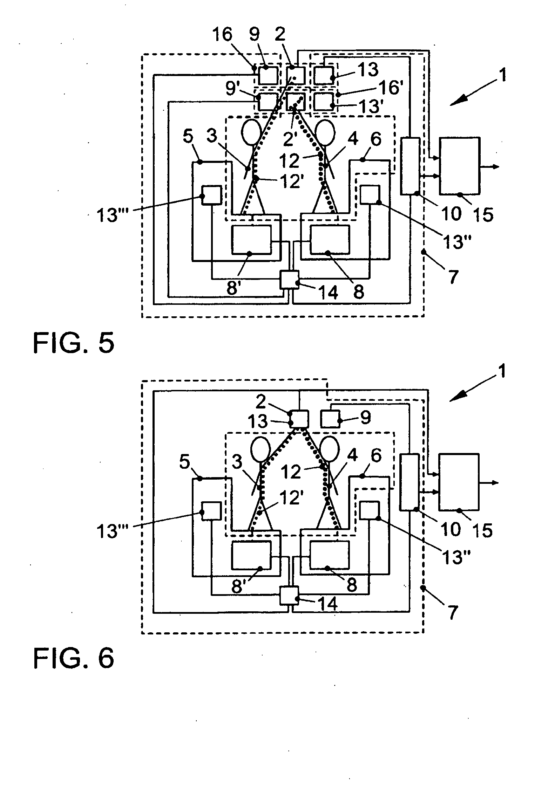

In Fig. 5 ist noch eine weitere Ausführungsform der Erfindung dargestellt, bei der in jeden der Fahrzeugsitze 5, 6 jeweils eine Sendeeinheit 8, 8' der Sendemittel integriert ist. Ferner sind mehrere Bedienelemente 2, 2' vorgesehen, die jeweils getrennt mit diesen Bedienelementen zugeordneten Empfangseinheiten 9, 9' angeordnet sind. Zusätzlich ist jedem Bedienelement eine eigene Erfassungseinheit 13, 13' zugeordnet.

Das Bedienelement 2 und die Empfangseinheit 9 bildet einen Bedienbereich 16. Das Bedienelement 2 und die Empfangseinheit 9 bilden einen weiteren Bedienbereich 16'. Die beiden Bedienbereiche 16, 16' können jeweils unabhängig voneinander die Erkennung einer Betätigung durch genau einen der Nutzer 3, 4 unterstützen. Findet in den Bedienbereichen 16, 16'jeweils eine Betätigung nur durch einen der Nutzer 3, 4 statt, so kann der entsprechende Nutzer 3, 4 zuverlässig erkannt werden. Beispielsweise wird der Nutzer 4 das Bedienelement 9 betätigen, während zeitgleich der Nutzer 3 das Bedienelement 2' betätigt.

Die Bedienbereiche 16, 16' umfassen hier jeweils auch eine eigene Nutzererfassungseinheit 13, 13'. Dieses ist nicht erforderlich. Ist beispielsweise ein Annäherungssensor in der Lage, eine Annäherung sowohl an den einen Bedienbereich 16 als auch an den anderen Bedienbereich 16' zu erfassen, reicht eine Nutzererfassungseinheit für beide Bedienbereiche 16, 16' aus.

Es ergibt sich für den Fachmann, dass anstelle des Bedienelements 2, 2' jeweils mehrere Bedienelemente in den einzelnen Bedienbereichen angeordnet sein können.

Wird von einer der Erfassungseinheiten 13, 13', die als Annäherungssensoren ausgebildet sind, eine Betätigungshandlung eines der Nutzer 3, 4 erfasst, so wird ein entsprechendes Aktionssignal an die Aktivierungseinheit 14 ausgegeben. Diese steuert die Sendeeinheiten 8, 8' an, so dass diese Hochfrequenzsignale bereitstellen, die in die Nutzer 3, 4 eingekoppelt werden. Die Hochfrequenzsignale, die die unterschiedlichen Sendeeinheiten 8, 8' bereitstellen, können unterschiedlich ausgestaltet sein, beispielsweise unterschiedliche Frequenzen aufweisen und/oder unterschiedlich modulierte Hochfrequenzsignale sein. Beispielsweise können die Sendeeinheiten 8, 8' so ausgebildet sein, dass sie zeitversetzt alternierende Hochfrequenzsignale mit derselben Frequenz bereitstellen. Über eine Korrelation des zeitlichen Empfangs des übertragenen Hochfrequenzsignals über die Hochfrequenzübertragungsstrecken 12, 12' ist es für die Steuereinheit 10 möglich, den Nutzer 3, 4 bzw. die entsprechende Hochfrequenzübertragungsstrecke 12, 12' zu identifizieren und somit eine Nutzererkennung und Zuordnung vorzunehmen.

Bei dieser Ausführungsform ist es darüber hinaus möglich, dass der Nutzer 3 und der Nutzer 4 die Bedienelemente 2 und 2' zeitgleich benutzen und dennoch eine zuverlässige Nutzererkennung und Zuordnung möglich ist. Dem Nutzererkennungssignal kann in diesem Fall zusätzlich eine Kennung zugeführt werden, die die entsprechende Empfangseinheit 9, 9' identifiziert, der eine Nutzererkennung zugeordnet ist. Betätigt der Nutzer 3 beispielsweise das Bedienelement 2, so würde die Kennung der Empfangseinheit 9, die dem Bedienelement 2 zugeordnet ist, der Nutzererkennung des Nutzers 3 in dem Nutzererkennungssignal zugefügt werden. Hierüber ist es der Bediensystemsteuereinheit 15 möglich, die einzelnen Bediensignale den einzelnen Nutzern 3, 4 eindeutig und zuverlässig zuzuordnen. Bei dieser Ausführungsform sind zusätzlich weitere Erfassungseinheiten 13" und 13"' vorgesehen, die als Sitzbelegungssensoren in die Fahrzeugsitze 5 und 6 entsprechend integriert sind. Hierüber wird zusätzlich sichergestellt, dass eine Hochfrequenzsignaleinkopplung nur dann stattfindet, wenn auch beide Fahrzeugsitze 5, 6 belegt sind. Signalleitungen von den Erfassungseinheiten 13" und 13"' zu der Steuereinheit 10 sind aus Gründen der Vereinfachung erneut nicht eingezeichnet. Ebenso ist es selbstverständlich wie bei allen Ausführungsformen möglich, dass die Aktivierungseinheit direkt in die Steuereinheit 10 integriert ist.

In Fig. 6 ist eine weitere Ausführungsform eines Bediensystems 1 eines Fahrzeugs dargestellt, bei dem erneut das Bedienelement 2 zugleich als Erfassungseinheit 13 zum Erfassen einer Aktion eines der Nutzer 3, 4 verwendet wird. Bei dieser Ausführungsform sind erneut in die Fahrzeugsitze 5, 6 Sendeeinheiten 8, 8' der Sendemittel integriert. Diese werden aktiviert, wenn eine Betätigung des Bedienelements 2 durch einen der Nutzer 3, 4 vorgenommen wird und das Bediensignal als Aktionssignal die Aktivierungseinheit 14 so ansteuert, dass die Sendeeinheiten 8, 8' zum Bereitstellen eines Hochfrequenzsignals veranlasst werden.

Die beschriebenen Ausführungsformen stellen lediglich beispielhafte Ausführungsformen eines Bediensystems mit einer Vorrichtung zum Erzeugen eines Nutzererkennungssignals dar. Es ergibt sich für den Fachmann, dass die einzelnen beschriebenen Merkmale beliebig miteinander kombiniert werden können, um andere Ausführungsformen zu realisieren. Insbesondere ist es möglich, dass weitere Fahrzeugsitze bzw. weitere Nutzer einzelne Bedienelemente bedienen können. Ebenso kann es vorgesehen sein, dass beispielsweise sämtliche Fahrzeugsitze in einem Fahrzeugfond als eine Gruppe angesehen werden und die darauf befindlichen Nutzer als eine Nutzergruppe angesehen werden. Es sind Ausführungsformen denkbar, bei denen für das Bediensystem notwendig ist zu erkennen, ob eine Bedienung durch einen Fahrer, Beifahrer oder einen Passagier in einem Fondsitz vorgenommen wurde, jedoch nicht welcher der Fondpassagiere die Betätigungshandlung ausgeführt hat. Für einen solchen Fall ist eine Zusammenfassung der Nutzer im Fond und der Fahrzeugsitze im Fond zu einer Gruppe sinnvoll.

Ferner ist es bei anderen Ausführungsformen möglich, andere Prinzipien zur Nutzerunterscheidung zu verwenden. Es können kamerabasierte Systeme, Trackingsysteme oder Ähnliches eingesetzt werden.

### Bezugszeichenliste

- 1: Bediensystem
- 2, 2': Bedienelemente
- 3, 4: Nutzer
- 5, 6: Fahrzeugsitze
- 7: Vorrichtung zum Erzeugen eines Nutzererkennungssignals (Nutzererkennungsvorrichtung)
- 8, 8': Sendeeinheit
- 9, 9': Empfangseinheit
- 10: Steuereinheit
- 11: Hand
- 12, 12': Hochfrequenzübertragungsstrecke
- 13, 13', 13", 13'": Erfassungseinheit
- 14: Aktivierungseinheit
- 15: Bediensystemsteuereinheit
- 16, 16': Bedienbereiche

## Patentansprüche

1. Vorrichtung (7) zum Erzeugen eines Nutzerkennungssignals bei einer Betätigungshandlung mindestens eines Nutzers (3, 4) von mehreren Nutzern (3, 4) in einem Fahrzeug umfassend eine Unterscheidungseinrichtung, um das den mindestens einen der Nutzer (3, 4) identifizierende Nutzerkennungssignal zu erzeugen, wobei mindestens eine Erfassungseinheit (13, 13', 13", 13"'), mit der bei einem Erfassen einer Aktion eines der Nutzer (3, 4) mindestens ein Aktionssignal erzeugt wird, mit der Unterscheidungseinrichtung informationstechnisch gekoppelt ist, so dass die Unterscheidungseinrichtung nur nach oder bei einem Vorliegen des einen Aktionssignals aktiviert ist oder wird,
**dadurch gekennzeichnet, dass**
die Erfassungseinheit (13, 13', 13", 13"') das mindestens eine Bedienelement (2, 2') umfasst und ein beim Betätigen des mindestens einen Bedienelements (2, 2') erzeugtes Bediensignal als Aktionssignal verwendet wird.

2. Vorrichtung (7) nach Anspruch 1, **dadurch gekennzeichnet, dass** die Unterscheidungseinrichtung umfasst: eine Steuereinheit (10) sowie Sendemittel und Empfangsmittel, die mit der Steuereinheit (10) verknüpft sind und so zueinander angeordnet sind, dass zwischen ihnen bei der Betätigungshandlung des mindestens einen Nutzers (3, 4) über dessen Körper eine nutzerspezifische Hochfrequenzübertragungsstrecke (12, 12') ausgebildet wird, über die ein HF-Signal übertragen wird, wobei die Steuereinheit (10) ausgebildet ist, die HF-Signalübertragung auszuwerten, um das den mindestens einen der Nutzer (3, 4) identifizierende Nutzerkennungssignal zu erzeugen, wobei die mindestens eine Erfassungseinheit (13, 13', 13", 13"'), mit der bei einem Erfassen einer Aktion eines der Nutzer (3, 4) mindestens ein Aktionssignal erzeugt wird, mit einer Aktivierungseinheit (14) gekoppelt ist, und die Aktivierungseinheit (14) ausgebildet ist, die Sendemittel nur nach oder bei einem Vorliegen des einen Aktionssignals zu aktivieren.

3. Vorrichtung (7) nach Anspruch 1 oder 2, **dadurch gekennzeichnet, dass** die mindestens eine Erfassungseinheit (9, 9') zusätzlich mindestens eine in räumlicher Nähe zu mindestens einem Bedienelement (2, 2') angeordnete Annäherungserfassungseinheit umfasst, mit der eine Annäherung eines Körperteils eines der Nutzer (3, 4) an das mindeste eine Bedienelement (2, 2') als die Aktion erfasst wird, welches bei der Betätigungshandlung betätigt wird.

4. Vorrichtung (7) nach einem der genannten Ansprüche, **dadurch gekennzeichnet, dass** die Erfassungseinheit (13, 13', 13", 13"') mindestens eine Sitzbelegungserfassungseinheit umfasst, die eine Belegung mindestens eines Fahrzeugsitzes (5, 6) durch einen der Nutzer (3, 4) anzeigt und als Aktion ein Sitzen eines der Nutzer (3, 4) auf dem mindestens einen Fahrzeugsitz (5, 6) erfasst.

5. Vorrichtung (7) nach einem der genannten Ansprüche, **dadurch gekennzeichnet, dass** die Unterscheidungseinrichtung nur bei einem Vorliegen mehrerer der Aktionssignale aktiviert ist oder wird.

6. Vorrichtung (7) nach einem der genannten Ansprüche, **dadurch gekennzeichnet, dass** die Sendemittel eine oder mehrere Sendeeinheiten (8, 8') umfassen, die jeweils einem Fahrzeugsitz (5, 6) zugeordnet sind und ein für den Fahrzeugsitz (5, 6) oder eine Gruppe von Fahrzeugsitzen (5, 6), der dieser Fahrzeugsitz (5, 6) angehört, spezifisches HF-Signal für ein Einkoppeln in einen der Nutzer (3, 4), der auf dem entsprechenden Fahrzeugsitz (5, 6) sitzt, bereitstellen und die Empfangsmittel mindestens eine Empfangseinheit (9) umfassen, die in räumlicher Nähe zu dem einen oder den mehreren Bedienelementen (2, 2') so angeordnet ist, dass bei der Betätigungshandlung, die ein Betätigen des einen oder eines der mehreren Bedienelemente (2, 2') umfasst, die nutzerspezifische Hochfrequenzübertragungsstrecke (12, 12') ausgebildet wird.

7. Vorrichtung (7) nach einem der genannten Ansprüche, **dadurch gekennzeichnet, dass** die Sendemittel mindestens eine Sendeeinheit (8) umfassen, die in räumlicher Nähe zu dem einen oder den mehreren Bedienelementen (2, 2') so angeordnet ist, so dass bei der Betätigungshandlung, die ein Betätigen des einen oder eines der mehreren Bedienelemente (2, 2') umfasst, die nutzerspezifische Hochfrequenzübertragungsstrecke (12, 12') zwischen der Sendeeinheit (8) und den Empfangsmitteln ausgebildet wird, und die Empfangsmittel eine oder mehrere Empfangseinheiten (9, 9') umfassen, die jeweils einem Fahrzeugsitz (5, 6) zugeordnet sind und so angeordnet sind, dass einer der Nutzer (3, 4), der auf dem entsprechenden Fahrzeugsitz (5, 6) sitzt, bei einem Ausführen der Betätigungshandlung die nutzerspezifische Hochfrequenzübertragungsstrecke (12, 12') zwischen den Sendemittein und der dem entsprechenden Fahrzeugsitz (5, 6) zugeordneten Empfangseinheit (9, 9') ausgebildet.

8. Verfahren zum Erzeugen eines Nutzerkennungssignals bei einer Betätigungshandlung mindestens eines Nutzers (3, 4) von mehreren Nutzern (3, 4) in einem Fahrzeug mit Hilfe einer Unterscheidungseinrichtung, umfassend die Schritte:
Ausführen einer Nutzerunterscheidung mittels der Unterscheidungseinrichtung, um den mindestens einen Nutzer (3, 4) zu identifizieren und
Erzeugen eines den mindestens einen der Nutzer (3, 4) identifizierenden Nutzererkennungssignals,
mittels mindestens einer Erfassungseinheit (13, 13', 13", 13"') eine Aktion eines der Nutzer (3, 4) erfasst wird oder ein Vorliegen der Aktion überwacht wird, und bei dem Erfassen der Aktion ein Aktionssignal erzeugt wird, und durch das Aktionssignal die Unterscheidungseinrichtung so gesteuert wird, dass diese nur nach oder bei einem Vorliegen des einen Aktionssignals aktiviert wird,
**dadurch gekennzeichnet, dass**
die Erfassungseinheit (13, 13', 13", 13"') das mindestens eine Bedienelement (2, 2') umfasst und als Aktion ein beim Betätigen des mindestens einen Bedienelements (2, 2') erzeugtes Bediensignal als Aktionssignal verwendet wird.

9. Verfahren nach Anspruch 8 zum Erzeugen eines Nutzerkennungssignals bei einer Betätigungshandlung mindestens eines Nutzers (3, 4) von mehreren Nutzern (3, 4) in einem Fahrzeug mit Hilfe der Unterscheidungseinrichtung, **dadurch gekennzeichnet, dass** die Unterscheidungseinrichtung eine Steuereinheit (10) sowie Sendemittel und Empfangsmittel umfasst, die mit der Steuereinheit (10) verknüpft sind und so zueinander angeordnet sind, dass zwischen ihnen bei der Betätigungshandlung des mindestens einen Nutzers (3, 4) über dessen Körper eine nutzerspezifische Hochfrequenzübertragungsstrecke (12, 12') ausgebildet wird und das Verfahren ferner folgende Schritte umfasst:
Bereitstellen mindestens eines HF-Signals mit Hilfe der Sendemittel,
Empfangen des über den Körper des mindestens einen Nutzers (3, 4) übertragenen HF-Signals mittels der Empfangsmittel,
Auswerten der HF-Übertragung, um die nutzerspezifische Übertragungsstrecke (12, 12') zu ermitteln und hierüber den mindestens einen Nutzer (3, 4) zu identifizieren und Erzeugen eines den mindestens einen der Nutzer (3, 4) identifizierenden Nutzerkennungssignals,
wobei mittels der mindestens einen Erfassungseinheit (13, 13', 13", 13"') eine Aktion eines der Nutzer (3, 4) erfasst wird oder ein Vorliegen der Aktion überwacht wird, und bei dem Erfassen der Aktion das Aktionssignal erzeugt wird, und die Sendemittel über eine Aktivierungseinheit (14) so gesteuert werden, dass die Sendemittel nur nach oder bei einem Vorliegen des einen Aktionssignals an der Aktivierungseinheit das mindestens eine HF-Sendesignal bereitstellten.

10. Verfahren nach Anspruch 8 oder 9, **dadurch gekennzeichnet, dass** die mindestens eine Erfassungseinheit (9, 9') zusätzlich mindestens eine in räumlicher Nähe zu mindestens einem Bedienelement (2, 2') angeordnete Annäherungserfassungseinheit umfasst, mit der eine Annäherung eines Körperteils eines der Nutzer (3, 4) an das mindeste eine Bedienelement (2, 2') als die Aktion erfasst wird, wobei die Betätigungshandlung ein Betätigen des mindestens einen Bedienelementes (2,2') umfasst.

11. Verfahren nach einem der Ansprüche 8 bis 10, **dadurch gekennzeichnet, dass** die Erfassungseinheit (13, 13', 13", 13"') mindestens eine Sitzbelegungserfassungseinheit umfasst, die eine Belegung mindestens eines Fahrzeugsitzes (5, 6) durch einen der Nutzer (3, 4) anzeigt, und als Aktion ein Sitzen eines der Nutzer (3, 4) auf dem mindestens einen Fahrzeugsitz (5, 6) erfasst wird.

12. Verfahren nach einem der Ansprüche 8 bis 11, **dadurch gekennzeichnet, dass** die Unterscheidungseinrichtung so gesteuert wird, dass diese nur nach oder bei einem Vorliegen mehrerer der Aktionssignale aktiviert wird,

13. Verfahren nach einem der Ansprüche 8 bis 12, **dadurch gekennzeichnet, dass** die Sendemittel eine oder mehrere Sendeeinheiten (8, 8') umfassen, die jeweils einem Fahrzeugsitz (5, 6) zugeordnet sind, und jeweils ein für den Fahrzeugsitz (5, 6) spezifisches oder für eine Gruppe von Fahrzugsitzen spezifisches HF-Sendesignal für eine Einkoppelung in einen der Nutzer (3, 4), der auf dem entsprechenden Fahrzeugsitz (5, 6) sitzt, nach oder bei einem Vorliegen des einen Aktionssignals bereitstellen, und die Empfangsmittel mindestens eine Empfangseinheit (9, 9') umfassen, die in räumlicher Nähe zu dem einen oder den mehreren Bedienelementen (2, 2') so angeordnet ist, dass bei der Betätigungshandlung, die ein Betätigen des einen oder eines der mehreren Bedienelemente (2, 2') umfasst, die nutzerspezifische Hochfrequenzübertragungsstrecke so ausgebildet wird, dass das über die nutzerspezifische Hochfrequenzübertragungsstrecke (12, 12') übertragene mindestens eine HF-Sendesignal mittels der mindestens einen Empfangseinheit (9, 9') empfangen wird.

14. Verfahren nach einem der Ansprüche 8 bis 13, **dadurch gekennzeichnet, dass** die Empfangsmittel eine oder mehrere Empfangseinheiten (9, 9') umfassen, die jeweils einem Fahrzeugsitz (5, 6) zugeordnet sind und so angeordnet sind, dass einer der Nutzer (3, 4), der auf einem der entsprechenden Fahrzeugsitze (5, 6) sitzt, bei einem Ausführen der Betätigungshandlung die nutzerspezifische Hochfrequenzübertragungsstrecke (12, 12') zwischen den Sendemitteln und der dem entsprechenden Fahrzeugsitz (5, 6) zugeordneten Empfangseinheit (9, 9') ausgebildet und jeweils das über die nutzerspezifische Hochfrequenzübertragungsstrecke (12, 12') übertragene entsprechende HF-Sendesignal über die zugeordnete Empfangseinheit (9, 9') empfangen wird, und die Sendemittel mindestens eine Sendeeinheit (8, 8') umfassen, die in räumlicher Nähe zu dem einen oder den mehreren Bedienelementen (2, 2') so angeordnet ist, so dass bei der Betätigungshandlung, die ein Betätigen des einen oder eines der mehreren Bedienelemente (2, 2') umfasst, die nutzerspezifische Hochfrequenzübertragungsstrecke (12, 12') zwischen der Sendeeinheit (8, 8') und den Empfangsmitteln ausgebildet wird und das mindestens eine HF-Sendesignal nach oder bei einem Vorliegen des einen Aktionssignals bereitgestellt wird.

## Claims

1. Apparatus (7) for producing a user identification signal in the event of an operating action by at least one user (3, 4) from a plurality of users (3, 4) in a vehicle comprising a distinguishing device in order to produce the user identification signal that identifies the at least one of the users (3, 4), wherein at least one sensing unit (13, 13', 13", 13"'), which is used to produce at least one action signal in the event of sensing of an action by one of the users (3, 4), is coupled to the distinguishing device for the purpose of information interchange, as a result of which the distinguishing device has been or is activated only after or when the one action signal is present, **characterized in that**
the sensing unit (13, 13', 13", 13"') comprises the at least one operator control element (2, 2'), and an operator control signal that is produced when the at least one operator control element (2, 2') is operated is used as an action signal.

2. Apparatus (7) according to Claim 1, **characterized in that** the distinguishing device comprises: a control unit (10) and also transmission means and reception means that are linked to the control unit (10) and are arranged relative to one another such that a user-specific radio-frequency transmission link (12, 12'), which is used to transmit an RF signal, is formed between them in the event of the operating action by the at least one user (3, 4) via his body, wherein the control unit (10) is designed to evaluate the RF signal transmission in order to produce the user identification signal that identifies the at least one of the users (3, 4), wherein the at least one sensing unit (13, 13', 13", 13"') that is used to produce at least one action signal in the event of sensing of an action by one of the users (3, 4) is coupled to an activation unit (14), and the activation unit (14) is designed to activate the transmission means only after or when the one action signal is present.

3. Apparatus (7) according to Claim 1 or 2, **characterized in that** the at least one sensing unit (9, 9') additionally comprises at least one approach sensing unit that is arranged in physical proximity to at least one operator control element (2, 2') and that is used to sense an approach by a body part of one of the users (3, 4) to the at least one operator control element (2, 2') that is operated in the event of the operating action as the action.

4. Apparatus (7) according to one of the stated claims, **characterized in that** the sensing unit (13, 13', 13", 13"') comprises at least one seat occupancy sensing unit that indicates occupancy of at least one vehicle seat (5, 6) by one of the users (3, 4) and senses one of the users (3, 4) sitting on the at least one vehicle seat (5, 6) as an action.

5. Apparatus (7) according to one of the stated claims, **characterized in that** the distinguishing device has been or is activated only when a plurality of the action signals are present.

6. Apparatus (7) according to one of the stated claims, **characterized in that** the transmission means comprise one or more transmission units (8, 8') that are each associated with a vehicle seat (5, 6) and provide an RF signal, which is specific to the vehicle seat (5, 6) or a group of vehicle seats (5, 6) to which this vehicle seat (5, 6) belongs, for coupling into one of the users (3, 4) who is sitting on the relevant vehicle seat (5, 6), and the reception means comprise at least one reception unit (9) that is arranged in physical proximity to the one or the plurality of operator control elements (2, 2') such that the user-specific radio-frequency transmission link (12 12') is formed in the event of the operating action that comprises operation of the one or of one of the plurality of operator control elements (2, 2').

7. Apparatus (7) according to one of the stated claims, **characterized in that** the transmission means comprise at least one transmission unit (8) that is arranged in physical proximity to the one or the plurality of operator control elements (2, 2') such that the user-specific radio-frequency transmission link (12, 12') is formed between the transmission unit (8) and the reception means in the event of the operating action that comprises operation of the one or of one of the plurality of operator control elements (2, 2'), and the reception means comprise one or more reception units (9, 9') that are each associated with a vehicle seat (5, 6) and are arranged such that one of the users (3, 4) who is sitting on the relevant vehicle seat (5, 6) forms the user-specific radio-frequency transmission link (12, 12') between the transmission means and the reception unit (9, 9') associated with the relevant vehicle seat (5, 6) in the event of execution of the operating action.

8. Method for producing a user identification signal in the event of an operating action by at least one user (3, 4) from a plurality of users (3, 4) in a vehicle using a distinguishing device, comprising the following steps:
a user distinction is made by means of the distinguishing device in order to identify the at least one user (3, 4), and
a user identification signal that identifies the at least one of the users (3, 4) is produced,
at least one sensing unit (13, 13', 13", 13"') is used to sense an action by one of the users (3, 4) or to monitor the presence of the action, and an action signal is produced in the event of the sensing of the action, and the action signal controls the distinguishing device such that it is activated only after or when the one action signal is present,
**characterized in that**
the sensing unit (13, 13', 13", 13"') comprises the at least one operator control element (2, 2') and the action used is an operator control signal produced in the event of the operation of the at least one operator control element (2, 2') as an action signal.

9. Method according to Claim 8 for producing a user identification signal in the event of an operating action by at least one user (3, 4) from a plurality of users (3, 4) in a vehicle using the distinguishing device, **characterized in that** the distinguishing device comprises a control unit (10) and also transmission means and reception means that are linked to the control unit (10) and are arranged relative to one another such that a user-specific radio-frequency transmission link (12, 12') is formed between them in the event of the operating action by the at least one user (3, 4) via his body, and the method also comprises the following steps:
at least one RF signal is provided using the transmission means,
the RF signal transmitted via the body of the at least one user (3, 4) is received by means of the reception means,
the RF transmission is evaluated in order to ascertain the user-specific transmission link (12, 12') and thereby to identify the at least one user (3, 4), and a user identification signal that identifies the at least one of the users (3, 4) is produced,
wherein the at least one sensing unit (13, 13', 13", 13"') is used to sense an action by one of the users (3, 4) or to monitor the presence of the action, and the action signal is produced in the event of the sensing of the action, and the transmission means are controlled via an activation unit (14) such that the transmission means provide the at least one RF transmission signal only after or when the one action signal is present on the activation unit.

10. Method according to Claim 8 or 9, **characterized in that** the at least one sensing unit (9, 9') additionally comprises at least one approach sensing unit that is arranged in physical proximity to at least one operator control element (2, 2') and that is used to sense an approach by a body part of one of the users (3, 4) to the at least one operator control element (2, 2') as the action, wherein the operating action comprises operation of the at least one operator control element (2, 2').

11. Method according to one of Claims 8 to 10, **characterized in that** the sensing unit (13, 13', 13", 13"') comprises at least one seat occupancy sensing unit that indicates occupancy of at least one vehicle seat (5, 6) by one of the users (3, 4), and one of the users (3, 4) sitting on the at least one vehicle seat (5, 6) is sensed as an action.

12. Method according to one of Claims 8 to 11, **characterized in that** the distinguishing device is controlled such that it is activated only after or when a plurality of the action signals are present.

13. Method according to one of Claims 8 to 12, **characterized in that** the transmission means comprise one or more transmission units (8, 8') that are each associated with a vehicle seat (5, 6), and each provide an RF transmission signal, which is specific to the vehicle seat (5, 6) or specific to a group of vehicle seats, for coupling into one of the users (3, 4) who is sitting on the relevant vehicle seat (5, 6) after or when the one action signal is present, and the reception means comprise at least one reception unit (9, 9') that is arranged in physical proximity to the one or the plurality of operator control elements (2, 2') such that in the event of the operating action that comprises operation of the one or of one of the plurality of operator control elements (2, 2') the user-specific radio-frequency transmission link is formed such that the at least one RF transmission signal transmitted via the user-specific radio-frequency transmission link (12, 12') is received by means of the at least one reception unit (9, 9').

14. Method according to one of Claims 8 to 13, **characterized in that** the reception means comprise one or more reception units (9, 9') that are each associated with a vehicle seat (5, 6) and are arranged such that one of the users (3, 4) who is sitting on one of the relevant vehicle seats (5, 6) forms the user-specific radio-frequency transmission link (12, 12') between the transmission means and the reception unit (9, 9') associated with the relevant vehicle seat (5, 6) in the event of execution of the operating action, and the respective relevant RF transmission signal transmitted via the user-specific radio-frequency transmission link (12, 12') is received via the associated reception unit (9, 9'), and the transmission means comprise at least one transmission unit (8, 8') that is arranged in physical proximity to the one or the plurality of operator control elements (2, 2') such that in the event of the operating action that comprises operation of the one or of one of the plurality of operator control elements (2, 2') the user-specific radio-frequency transmission link (12, 12') is formed between the transmission unit (8, 8') and the reception means and the at least one RF signal is provided after or when the one action signal is present.

## Revendications

1. Dispositif (7) pour générer un signal d'identification d'utilisateur lors du traitement d'un actionnement d'au moins un utilisateur (3, 4) parmi plusieurs utilisateurs (3, 4) dans un véhicule, comprenant un dispositif de différenciation pour générer le signal d'identification d'utilisateur qui identifie l'au moins un des utilisateurs (3, 4), au moins une unité de détection (13, 13', 13", 13"'), avec laquelle est généré au moins un signal d'action en cas de détection d'une action de l'un des utilisateurs (3, 4), étant connectée informatiquement avec le dispositif de différenciation de sorte que le dispositif de différenciation ne soit ou ne sera activé qu'après ou en présence de l'un signal d'action,
**caractérisé en ce que**
l'unité de détection (13, 13', 13", 13"') comprend l'au moins un élément de commande (2, 2') et un signal de commande généré lors de l'actionnement de l'au moins un élément de commande (2, 2') est utilisé comme signal d'action.

2. Dispositif (7) selon la revendication 1, **caractérisé en ce que** le dispositif de différenciation comprend : une unité de commande (10) ainsi que des moyens d'émission et des moyens de réception qui sont combinés avec l'unité de commande (10) et sont disposés les uns par rapport aux autres de telle sorte qu'il se forme entre eux, lors du traitement de l'actionnement de l'au moins un utilisateur (3, 4), par le biais de son corps, un trajet de transmission à haute fréquence (12, 12') spécifique à l'utilisateur par le biais duquel est transmis un signal HF, l'unité de commande (10) étant configurée pour interpréter la transmission du signal HF afin de générer le signal d'identification d'utilisateur qui identifie l'au moins un des utilisateurs (3, 4), l'au moins une unité de détection (13, 13', 13", 13"'), avec laquelle au moins un signal d'action est généré lors de la détection d'une action de l'un des utilisateurs (3, 4), étant connectée avec une unité d'activation (14) et l'unité d'activation (14) étant configurée pour activer les moyens d'émission seulement après ou en présence de l'un signal d'action.

3. Dispositif (7) selon la revendication 1 ou 2, **caractérisé en ce que** l'au moins une unité de détection (9, 9') comprend en plus au moins une unité de détection d'approche disposée à proximité dans l'espace d'au moins un élément de commande (2, 2'), avec laquelle une approche d'une partie du corps de l'un des utilisateurs (3, 4) vers l'au moins un élément de commande (2, 2') est détectée en tant qu'action, lequel est actionné lors du traitement de l'actionnement.

4. Dispositif (7) selon l'une des revendications précédentes, **caractérisé en ce que** l'unité de détection (13, 13', 13", 13"') comprend au moins une unité de détection d'occupation de siège qui indique une occupation d'au moins un siège de véhicule (5, 6) par l'un des utilisateurs (3, 4) et détecte comme action le fait de s'asseoir par l'un des utilisateurs (3, 4) sur l'au moins un siège de véhicule (5, 6).

5. Dispositif (7) selon l'une des revendications précédentes, **caractérisé en ce que** le dispositif de différenciation n'est ou ne sera activé qu'en présence de plusieurs des signaux d'action.

6. Dispositif (7) selon l'une des revendications précédentes, **caractérisé en ce que** les moyens d'émission comprennent une ou plusieurs unités d'émission (8, 8'), lesquelles sont respectivement associées à un siège de véhicule (5, 6) et délivrent un signal HF spécifique au siège de véhicule (5, 6) ou à un groupe de sièges de véhicule (5, 6) duquel fait partie ce siège de véhicule (5, 6) pour une injection dans l'un des utilisateurs (3, 4) qui s'assied sur le siège de véhicule (5, 6) correspondant, et les moyens de réception comprennent au moins une unité de réception (9) qui est disposée à proximité dans l'espace de l'un ou des plusieurs éléments de commande (2, 2') de telle sorte que lors du traitement de l'actionnement, qui comprend un actionnement du ou de l'un des plusieurs éléments de commande (2, 2'), le trajet de transmission à haute fréquence (12, 12') spécifique à l'utilisateur est formé.

7. Dispositif (7) selon l'une des revendications précédentes, **caractérisé en ce que** les moyens d'émission comprennent au moins une unité d'émission (8), qui est disposée à proximité dans l'espace de l'un ou des plusieurs éléments de commande (2, 2') de telle sorte que lors du traitement de l'actionnement, qui comprend un actionnement du ou de l'un des plusieurs éléments de commande (2, 2'), le trajet de transmission à haute fréquence (12, 12') spécifique à l'utilisateur est formé entre l'unité d'émission (8) et les moyens de réception, et les moyens de réception comprennent une ou plusieurs unités de réception (9, 9') qui sont respectivement associées à un siège de véhicule (5, 6) et sont disposées de telle sorte que l'un des utilisateurs (3, 4), qui s'assied sur le siège de véhicule (5, 6) correspondant, forme le trajet de transmission à haute fréquence (12, 12') spécifique à l'utilisateur entre les moyens d'émission et l'unité de réception (9, 9') associée au siège de véhicule (5, 6) correspondant lors d'une exécution du traitement de l'actionnement.

8. Procédé pour générer un signal d'identification d'utilisateur lors du traitement d'un actionnement d'au moins un utilisateur (3, 4) parmi plusieurs utilisateurs (3, 4) dans un véhicule à l'aide d'un dispositif de différenciation, comprenant les étapes suivantes :
exécution d'une différenciation d'utilisateur au moyen du dispositif de différenciation afin d'identifier l'au moins un utilisateur (3, 4) et
génération d'un signal d'identification d'utilisateur qui identifie l'au moins un des utilisateurs (3, 4),
une action de l'un des utilisateurs (3, 4) est détectée ou une présence de l'action est surveillée au moyen d'au moins une unité de détection (13, 13', 13", 13"'), et un signal d'action est généré en cas de détection de l'action, et le dispositif de différenciation est commandé par le signal d'action de telle sorte que celui-ci ne sera activé qu'après ou en présence de l'un signal d'action,
**caractérisé en ce que**
l'unité de détection (13, 13', 13", 13"') comprend l'au moins un élément de commande (2, 2') et un signal de commande généré lors de l'actionnement de l'au moins un élément de commande (2, 2') en tant qu'action est utilisé comme signal d'action.

9. Procédé selon la revendication 8 pour générer un signal d'identification d'utilisateur lors du traitement d'un actionnement d'au moins un utilisateur (3, 4) parmi plusieurs utilisateurs (3, 4) dans un véhicule à l'aide du dispositif de différenciation, **caractérisé en ce que** le dispositif de différenciation comprend une unité de commande (10) ainsi que des moyens d'émission et des moyens de réception qui sont combinés avec l'unité de commande (10) et sont disposés les uns par rapport aux autres de telle sorte qu'il se forme entre eux, lors du traitement de l'actionnement de l'au moins un utilisateur (3, 4), par le biais de son corps, un trajet de transmission à haute fréquence (12, 12') spécifique à l'utilisateur et le procédé comprend en outre les étapes suivantes :
délivrance d'au moins un signal HF à l'aide des moyens d'émission,
réception à l'aide des moyens de réception du signal HF transmis par le biais du corps de l'au moins un utilisateur (3, 4),
interprétation de la transmission HF afin de déterminer le trajet de transmission (12, 12') spécifique à l'utilisateur et identifier par le biais de celui-ci l'au moins un utilisateur (3, 4) et
génération d'un signal d'identification d'utilisateur qui identifie l'au moins un des utilisateurs (3, 4),
une action de l'un des utilisateurs (3, 4) étant détectée ou la présence de l'action étant surveillée au moyen de l'au moins une unité de détection (13, 13', 13", 13"'), et le signal d'action étant généré lors de la détection de l'action, et les moyens d'émission étant commandés par le biais d'une unité d'activation (14) de telle sorte que les moyens d'émission délivrent l'au moins un signal d'émission HF à l'unité d'activation seulement après ou en présence de l'un signal d'action.

10. Procédé selon la revendication 8 ou 9, **caractérisé en ce que** l'au moins une unité de détection (9, 9') comprend en plus au moins une unité de détection d'approche disposée à proximité dans l'espace d'au moins un élément de commande (2, 2'), avec laquelle une approche d'une partie du corps de l'un des utilisateurs (3, 4) vers l'au moins un élément de commande (2, 2') est détectée en tant qu'action, le traitement de l'actionnement comprenant un actionnement de l'au moins un élément de commande (2, 2').

11. Procédé selon l'une des revendications 8 à 10, **caractérisé en ce que** l'unité de détection (13, 13', 13", 13"') comprend au moins une unité de détection d'occupation de siège qui indique une occupation d'au moins un siège de véhicule (5, 6) par l'un des utilisateurs (3, 4) et le fait de s'asseoir par l'un des utilisateurs (3, 4) sur l'au moins un siège de véhicule (5, 6) est détecté comme action.

12. Procédé selon l'une des revendications 8 à 11, **caractérisé en ce que** le dispositif de différenciation est commandé de telle sorte que celui-ci ne sera activé qu'après ou en présence de plusieurs des signaux d'action.

13. Procédé selon l'une des revendications 8 à 12, **caractérisé en ce que** les moyens d'émission comprennent une ou plusieurs unités d'émission (8, 8'), lesquelles sont respectivement associées à un siège de véhicule (5, 6) et délivrent respectivement un signal d'émission HF spécifique au siège de véhicule (5, 6) ou spécifique à un groupe de sièges de véhicule pour une injection dans l'un des utilisateurs (3, 4) qui s'assied sur le siège de véhicule (5, 6) correspondant, après ou en présence de l'un signal d'action, et les moyens de réception comprennent au moins une unité de réception (9, 9') qui est disposée à proximité dans l'espace de l'un ou des plusieurs éléments de commande (2, 2') de telle sorte que lors du traitement de l'actionnement, qui comprend un actionnement du ou de l'un des plusieurs éléments de commande (2, 2'), le trajet de transmission à haute fréquence spécifique à l'utilisateur est formé de telle sorte que l'au moins un signal d'émission HF transmis par le biais du trajet de transmission à haute fréquence (12, 12') spécifique à l'utilisateur est reçu à l'aide de l'au moins une unité de réception (9, 9').

14. Procédé selon l'une des revendications 8 à 13, **caractérisé en ce que** les moyens de réception comprennent une ou plusieurs unités de réception (9, 9') qui sont respectivement associées à un siège de véhicule (5, 6) et sont disposées de telle sorte que l'un des utilisateurs (3, 4), qui s'assied sur l'un des sièges de véhicule (5, 6) correspondants, forme le trajet de transmission à haute fréquence (12, 12') spécifique à l'utilisateur entre les moyens d'émission et l'unité de réception (9, 9') associée au siège de véhicule (5, 6) correspondant lors d'une exécution du traitement de l'actionnement et le signal d'émission HF correspondant transmis par le biais du trajet de transmission à haute fréquence (12, 12') spécifique à l'utilisateur est à chaque fois reçu par le biais de l'unité de réception (9, 9') associée, et les moyens d'émission comprennent au moins une unité d'émission (8, 8'), laquelle est disposée à proximité dans l'espace de l'un ou des plusieurs éléments de commande (2, 2') de telle sorte que lors du traitement de l'actionnement, qui comprend un actionnement du ou de l'un des plusieurs éléments de commande (2, 2'), le trajet de transmission à haute fréquence (12, 12') spécifique à l'utilisateur est formé entre l'unité d'émission (8, 8') et les moyens de réception, et l'au moins un signal d'émission HF est délivré après ou en présence de l'un signal d'action.
